# EUROPEAN PATENT APPLICATION

(11) **EP 4 273 272 A1**
(43) Date of publication of application: **08.11.2023**
(21) Application number: 21923161.0
(22) Date of filing: 09.12.2021
(51) Int. Cl.: C21C 1/02, C21C 1/04, C21C 5/28, C21C 5/30, C21C 5/32, C21C 5/46

(54) **REFINING METHOD OF MOLTEN IRON AND MANUFACTURING METHOD OF MOLTEN STEEL USING SAME**

(30) Priority: 01.02.2021 JP 2021014513
(71) Applicant: JFE Steel Corporation, Tokyo 100-0011 (JP)
(72) Inventor: NEGISHI, Hidemitsu, Tokyo 100-0011 (JP); AMANO, Shota, Tokyo 100-0011 (JP); MURAKAMI, Yumi, Tokyo 100-0011 (JP); OGASAWARA, Futoshi, Tokyo 100-0011 (JP); NAKASE, Kenji, Tokyo 100-0011 (JP)
(74) Representative: Haseltine Lake Kempner LLP
(86) International application number: PCT/JP2021/045253
(87) International publication number: WO 2022/163156

(57) **Abstract**

Proposed is a molten iron refining method capable of securing an in-flame staying time period of a heat transfer medium without being influenced by height adjustments of a blowing-purpose oxygen-blowing lance. As far as to a position lower than an upper end inside a converter-type vessel 1, a blowing-purpose oxygen-blowing lance 3 that supplies oxidizing gas and is capable of ascending and descending and at least one burner lance 4 capable of ascending and descending independently of the blowing-purpose oxygen-blowing lance are inserted. From the blowing-purpose oxygen-blowing lance, either oxidizing gas or oxidizing gas and CaO-containing refining agent are blown onto the molten iron. Also, a flame is formed by causing the burner lance to discharge fuel gas and combustion supporting gas. Powder particles discharged from the burner lance are caused to pass through the flame and to be blown onto the molten iron in a heat-transferred state, so that the molten iron is thermally compensated.

## Description

### Technical Field

The present invention is related to a refining method of molten iron in a converter and a manufacturing method of molten steel using the same.

### Background Art

A method required to reduce the amount of CO₂ generated from iron and steel processing includes increasing the amount of scrap (scrap iron) used in a converter to lower the blending ratio of molten pig iron ("hot metal ratio") that contains approximately 4.5 mass % C. Increasing the amount of scrap causes the heat of the molten pig iron to be consumed in heating and dissolving the scrap, which results in a temporary decrease in the temperature of the molten pig iron. Consequently, the following two problems arise.

### (1) A decrease in the scrap dissolution rate:

There will be a decrease in the scrap dissolution rate because one or both of carburization of and heat conduction to the scrap is reduced, for the reason that the molten pig iron in contact with the scrap surfaces becomes solidified due to the lower temperature and hinders the carburization or that the difference (ΔT) becomes smaller between the molten pig iron temperature and the liquidus temperature of a melting point depression phase formed in the scrap due to carburization from the molten pig iron.

### (2) A clog in a bottom-blowing nozzle:

In conjunction with the scrap dissolution, when the molten pig iron temperature becomes equal to or lower than "60°C + a molten pig iron liquid phase linear temperature" determined in accordance with the concentration of C in the molten pig iron, the molten pig iron immediately above the bottom-blowing nozzle becomes solidified and makes the bottom-blowing nozzle clogged. That causes the deterioration of agitation/blending characteristics of the molten pig iron to inhibit the carburization from the molten pig iron into the scrap, leading not only to a decrease in the dissolution rate of the scrap but also to a decrease in the efficiency of refining processes such as dephosphorization, for example, which will result in a large cost increase.

To solve the problems described in (1) and (2) above, conventionally, a heating material such as ferrosilicon, earthy graphite, and/or silicon carbide is charged into a converter to increase the molten pig iron temperature with the heat generated from an exothermic reaction between Si/C contained in each heating material and oxygen for blowing into a converter. However, the use of ferrosilicon causes an increase in the Si concentration in the molten pig iron, for which it is necessary to add a CaO content represented by calcium oxide, for example, to the inside of the furnace to prevent the basicity of slag (= CaO concentration in the slag (mass %) / SiO concentration in the slag (mass %)) to remove impurities such as P from becoming lower, thus increasing refining costs. In contrast, earthy graphite and silicon carbide contain carbon and are therefore not suitable for use, in view of the endeavor to reduce the amount of generated CO₂.

Further, methods not using the abovementioned heating material have been proposed (see Patent Literature 1 and Patent Literature 2) by which heated powder particles serving as a heat transfer medium are blown onto molten pig iron or molten steel from a top-blowing lance having a burner function.

### Citation List

### Patent Literature

Patent Literature 1: JP-2019-119906A
Patent Literature 2: JP-2014-159632A

### Summary of Invention

### Technical Problem

However, in both methods described in Patent Literatures 1 and 2, the top-blowing lance having the burner function is integrated with a top-blowing lance for blowing. For this reason, when the lance height is raised to prioritize heat transfer (to prolong an in-flame staying time period of powder), there is no choice but to perform a so-called "soft-blow operation", which denotes an increase in the concentration of iron oxide in the slag. That frequently causes a phenomenon called slopping where the slag in the converter expands and overflows to the outside of the furnace due to generated gas, significantly deteriorating the stability of the blowing process. Lowering the lance height in order to avoid slopping decreases the amount of heat transfer also. Consequently, this method is not considered practical because there would be large costs due to an increase in the lance weight caused by an intricate lance structure, as well as re-designing and strengthening of equipment or the like to support the weight, in comparison to a reduction in the hot metal ratio achieved without using the heating material.

The present invention is made in view of such circumstances as above and proposes a refining method of molten iron that solve the problems in the conventional refining methods based on the use of the integrated lance and a manufacturing method of molten steel using the same.

### Solution to Problem

The inventors have conducted various experiments to solve the abovementioned problems and studied subjects in refining methods using existing-type integrated lances. As a result, we discovered a molten iron refining method and a molten steel manufacturing method using the same that are novel and capable of solving the existing problems. The present invention is based on this discovery, and the gist thereof is presented below.

A molten iron refining method of the present invention capable of advantageously solving the abovementioned problems is a molten iron refining method for refining molten iron by adding an auxiliary raw material and supplying oxidizing gas to molten iron contained in a converter-type vessel, and is characterized by including: inserting, as far as to a position lower than an upper end inside the converter-type vessel, a blowing-purpose oxygen-blowing lance that supplies the oxidizing gas and that is capable of ascending and descending and at least one burner lance capable of ascending and descending independently of the blowing-purpose oxygen-blowing lance; blowing, onto the molten iron, either oxidizing gas or oxidizing gas and CaO-containing refining agent from the blowing-purpose oxygen-blowing lance; forming a flame by causing the burner lance to discharge fuel gas and combustion-supporting gas; and causing powder particles discharged from the burner lance to pass through the flame and to be blown onto the molten iron in a heat-transferred state, to achieve thermal compensation of the molten iron.

The first process of a molten steel manufacturing method according to the present invention includes:
the first raw material charging step of charging a cold iron source and molten pig iron to the first furnace of a converter-type vessel to form molten iron;
a desiliconization blowing step of performing a desiliconization blowing on the molten iron formed in the first raw material charging step by blowing oxidizing gas and a CaO-containing refining agent onto the molten iron from a blowing-purpose oxygen-blowing lance and also charging either a CaO-containing refining agent or recycled slag from a furnace top;
an intermediate slag removal step of removing slag formed in the desiliconization blowing step;
a dephosphorization blowing step of performing a dephosphorization blowing by blowing oxidizing gas from the blowing-purpose oxygen-blowing lance and also charging a CaO-containing refining agent or recycled slag from a furnace top;
a molten metal tapping step of tapping molten metal resulting from the dephosphorization blowing step;
the second raw material charging step of charging the molten metal tapped in the molten metal tapping step and a cold iron source to the second furnace of the converter-type vessel to produce molten iron;
a decarburization blowing step of performing a decarburization blowing process by blowing oxidizing gas onto the molten iron in the second furnace from the blowing-purpose oxygen-blowing lance and also charging either a CaO-containing refining agent or recycled slag from a furnace top to produce molten steel; and
a molten steel discharging step of discharging the molten steel. The molten steel manufacturing method is characterized by performing the abovementioned molten iron refining method in at least one step selected from among the desiliconization blowing step, the dephosphorization blowing step, and the decarburization blowing step.

The second process of a molten steel manufacturing method according to the present invention includes:
a raw material charging step of charging a cold iron source and molten pig iron to a converter-type vessel to form molten iron;
a desiliconization and dephosphorization blowing step of performing a desiliconization and dephosphorization blowing on the molten iron formed in the raw material charging step by blowing oxidizing gas and a CaO-containing refining agent onto the molten iron from a blowing-purpose oxygen-blowing lance and also charging either a CaO-containing refining agent or recycled slag from a furnace top;
an intermediate slag removal step of removing slag formed in the desiliconization and dephosphorization blowing step;
a decarburization blowing step of performing a decarburization blowing by blowing oxidizing gas from the blowing-purpose oxygen-blowing lance and also charging either a CaO-containing refining agent or recycled slag from a furnace top to produce molten steel; and
a molten steel discharging step of discharging the molten steel. The molten steel manufacturing method is characterized by performing the abovementioned molten iron refining method in at least one step selected from the desiliconization and dephosphorization blowing step and the decarburization blowing step.

A third process of a molten steel manufacturing method according to the present invention includes: a raw material charging step of charging a cold iron source and molten pig iron to a converter-type vessel to form molten iron;
a blowing step of performing a desiliconization, dephosphorization, and decarburization blowing on the molten iron formed in the raw material charging step by blowing oxidizing gas and a CaO-containing refining agent onto the molten iron from a blowing-purpose oxygen-blowing lance and also charging either a CaO-containing refining agent or recycled slag from a furnace top to produce molten steel; and
a molten steel discharging step of discharging the molten steel. The molten steel manufacturing method is characterized by performing the aforementioned molten iron refining method in the blowing step.

### Advantageous Effects of Invention

The present invention configured as described above can secure an in-flame staying period of the heat transfer medium without being affected by the height adjustments of the blowing-purpose oxygen-blowing lance, achieving heat transfer to the molten iron or to the molten steel without inhibiting the stability of the blowing processes, which has hitherto been a problem. This achievement contributes to the production of a thermal margin for dissolving carbon steel (SC).

### Brief Description of Drawings

FIG. 1 is a schematic view for explaining an example of a molten iron refining method according to the present invention.
FIG. 2 is a chart for explaining the relationship between the particle diameter of a powder particle and heat transfer efficiency in the molten iron refining method according to the present invention.
FIG. 3 is a schematic view for explaining each step in the first process of a molten steel manufacturing method according to the present invention.
FIG. 4 is a schematic view for explaining each step in the second process of the molten steel manufacturing method according to the present invention.
FIG. 5 is a schematic view for explaining each step in the third process of the molten steel manufacturing method according to the present invention.
FIG. 6 is a graph summarizing the results of examples.

### Description of Embodiments

### <Explanations of a process in a molten iron refining method of the present invention>

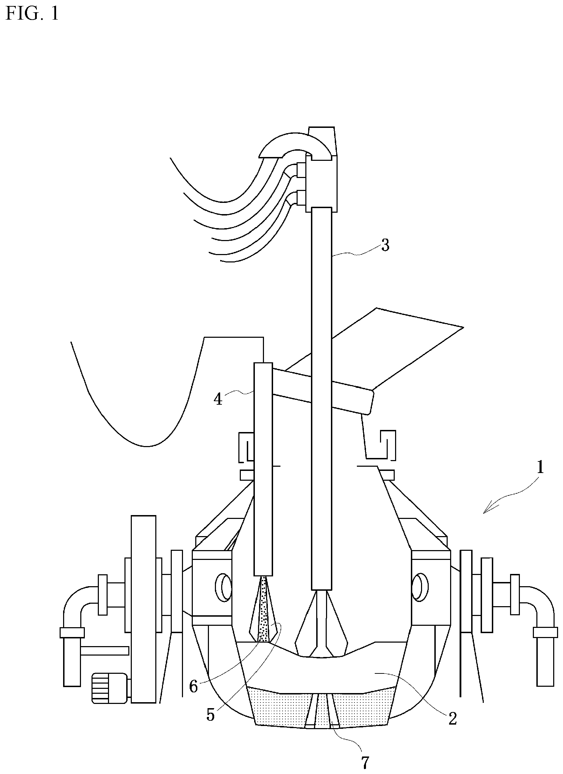

FIG. 1 is a schematic view for explaining an embodiment of a molten iron refining method according to the present invention. In the example shown in FIG. 1, the reference numeral 1 denotes a converter-type vessel; the reference numeral 2 denotes molten iron contained in converter-type vessel 1; the reference numeral 3 denotes a blowing-purpose oxygen-blowing lance that supplies oxidizing gas and is capable of ascending and descending; the reference numeral 4 denotes a burner lance capable of ascending and descending independently of the blowing-purpose oxygen-blowing lance 3; the reference numeral 5 denotes a flame formed by causing the burner lance 4 to discharge fuel gas and combustion supporting gas; the reference numeral 6 denotes powder particles discharged from the burner lance 4; and the reference numeral 7 denotes a tuyere provided at a furnace bottom. In this situation, the molten iron denotes molten pig iron and a cold iron source that has been melted.

According to the molten iron refining method in the present embodiment, at first, in the converter-type vessel 1 having the molten iron 2 contained therein, the blowing-purpose oxygen-blowing lance 3 capable of ascending and descending in the converter-type vessel 1 and the burner lance 4 capable of ascending and descending independently of the blowing-purpose oxygen-blowing lance 3 are inserted, as far as to a position lower than the upper end inside the converter-type vessel 1. Subsequently, from the blowing-purpose oxygen-blowing lance 3, either oxidizing gas or oxidizing gas and a CaO-containing refining agent are blown onto the molten iron 2. At the same time, the flame 5 is formed by causing the burner lance 4 to discharge the fuel gas and the combustion supporting gas. The powder particles 6 discharged from the burner lance 4 and serving as a heat transfer medium are caused to pass through the flame 5 and to be blown onto the molten iron 2 in a heat-transferred state, so that the molten iron 2 is thermally compensated. The quantity of the burner lance 4 is not limited to one, and even the use of two or more burner lances can achieve similar operation effects as with a single burner lance, by controlling the discharged amounts of the fuel gas, the combustion supporting gas, and the powder particles 6. The oxidizing gas included pure oxygen or a gas mixture of oxygen and carbon dioxide or inert gas. Further, the combustion-supporting gas includes air, oxygen-enriched air, or oxidizing gas.

The molten iron refining method described above is characterized in that the blowing-purpose oxygen-blowing lance 3 and the burner lance 4 can ascend and descend independently of each other, so that the insertion positions of the blowing-purpose oxygen-blowing lance 3 and the burner lance 4 can be arranged mutually different in the converter-type vessel 1. Thus, the in-flame staying time period of the powder particles 6 serving as the heat transfer medium can be obtained by not inserting the burner lance 4 as deep as the blowing-purpose oxygen-blowing lance 3 in the converter-type vessel 1 without being affected by the height adjustments of the blowing-purpose oxygen-blowing lance 3.

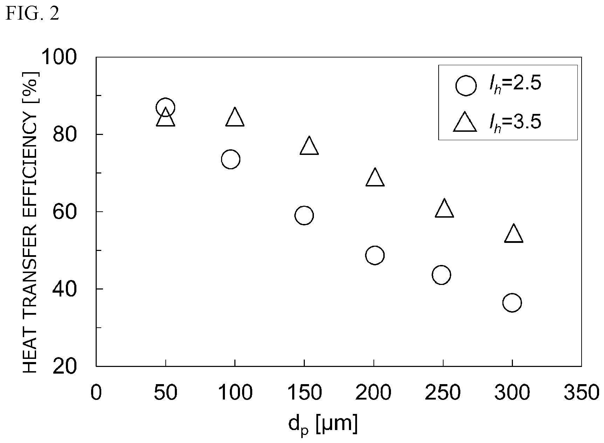

In an example where the tip end of an existing-type integrated blowing-purpose oxygen-blowing lance 3 is required to be positioned 2 m to 3 m away from the molten iron surface of the molten iron 2, the present embodiment allows the tip end of the burner lance 4 to be positioned 3 m to 4 m away from the molten iron surface of the molten iron 2 while maintaining the tip end of the blowing-purpose oxygen-blowing lance 3 at a position 2 m to 3 m away from the molten iron surface of the molten iron 2. In other words, in the conventional example, the tip end of the burner lance 4 needs to be positioned 2 m to 3 m away from the molten iron surface of the molten iron 2, while, in the present embodiment, the tip end of the burner lance 4 can be arranged 3 m to 4 m away from the molten iron surface of the molten iron 2, which is farther away from the molten iron surface of the molten iron 2. That can prolong the staying time period in the flame 5 of the powder particles 6 discharged from the burner lance 4 and serving as a heat transfer medium, for example, from the range of 0.01 s to 0.05 s in the conventional example (where the height lₕ from the tip end of the lance 4 to the molten iron surface of the molten iron 2 = 2 m to 3 m) to the range of 0.05 s to 0.5 s (where lₕ = 3 m to 4 m). When defined as a ratio of the amount of heat transferred from the actual temperature increase of the molten iron to the amount of heat supplied by the burner lance, a heat transfer efficiency (%) can improve by approximately 20% at a maximum with respect to the same particle diameter dₚ (µm) of the powder particles 6, as shown in FIG. 2. Thus, the present embodiment can achieve the heat transfer efficiency at a level that cannot be achieved by the existing-type integrated blowing-purpose oxygen-blowing lance 3, producing thermal margin for dissolving carbon steel (SC) from the improvement in the heat transfer efficiency.

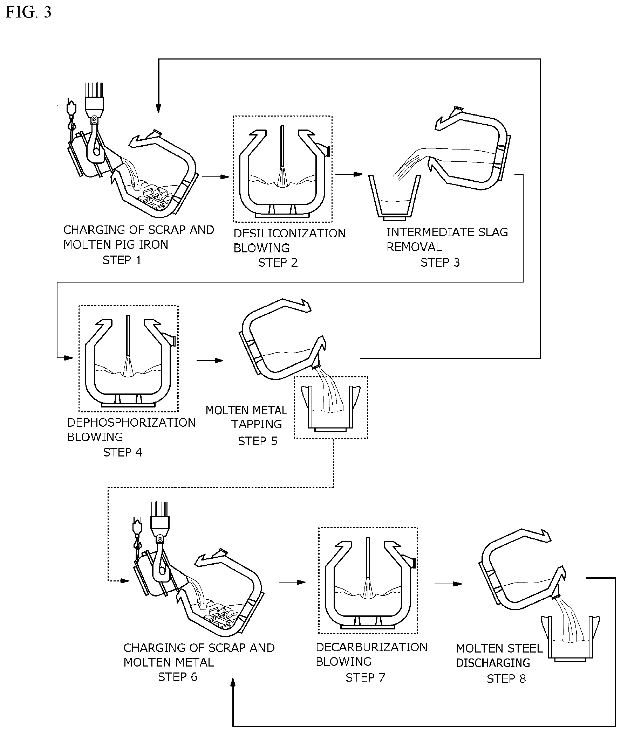

Next, a molten steel manufacturing method using the molten iron refining method described above will be explained, with reference to FIGs 3 to 5.

### <The first process of a molten steel manufacturing method>

FIG. 3 is a schematic view for explaining each step in the first process of a molten steel manufacturing method according to the present invention. The first process of the molten steel manufacturing method according to the present invention will be explained with reference to FIG. 3. First, the first raw material charging step (step 1) is performed by charging a cold iron source and molten pig iron to the first furnace of the converter-type vessel 1 to form molten iron. Subsequently, a desiliconization blowing step (step 2) is performed in which a desiliconization blowing is performed on the molten iron formed in the first raw material charging step (step 1) by blowing oxidizing gas and a CaO-containing refining agent onto the molten iron from the blowing-purpose oxygen-blowing lance and also charging either a CaO-containing refining agent or recycled slag from the furnace top. Next, an intermediate slag removal step (step 3) is performed by removing slag formed in the desiliconization blowing step (step 2). A dephosphorization blowing step (step 4) is then performed in which a dephosphorization blowing is performed by blowing oxidizing gas from the blowing-purpose oxygen-blowing lance and also charging either a CaO-containing refining agent or recycled slag from the furnace top, followed by a molten metal tapping step (step 5) performed by tapping metal (molten iron) resulting from the dephosphorization blowing step (step 4). The second raw material charging step (step 6) is performed by charging the molten metal tapped in the molten metal tapping step (step 5) and a cold iron source to a second furnace of the converter-type vessel. Next, a decarburization blowing step (step 7) is performed in which a decarburization blowing is performed by blowing oxidizing gas onto the molten metal in the second furnace from the blowing-purpose oxygen-blowing lance and also charging either a CaO-containing refining agent or recycled slag from the furnace top to obtain molten steel. Lastly, a molten steel discharging step (step 8) is performed by discharging the molten steel.

The first process of the molten steel manufacturing method described above involves performing the above-mentioned molten iron refining method in at least one step selected from the desiliconization blowing step (step 2), the dephosphorization blowing step (step 4), and the decarburization blowing step (step 7). That can achieve heat transfer to the molten iron or the molten steel without inhibiting the stability of the blowing processes, which has hitherto been a problem, thus producing a thermal margin for dissolving the carbon steel (SC) serving as the cold iron source.

### <The second process of the molten steel manufacturing method>

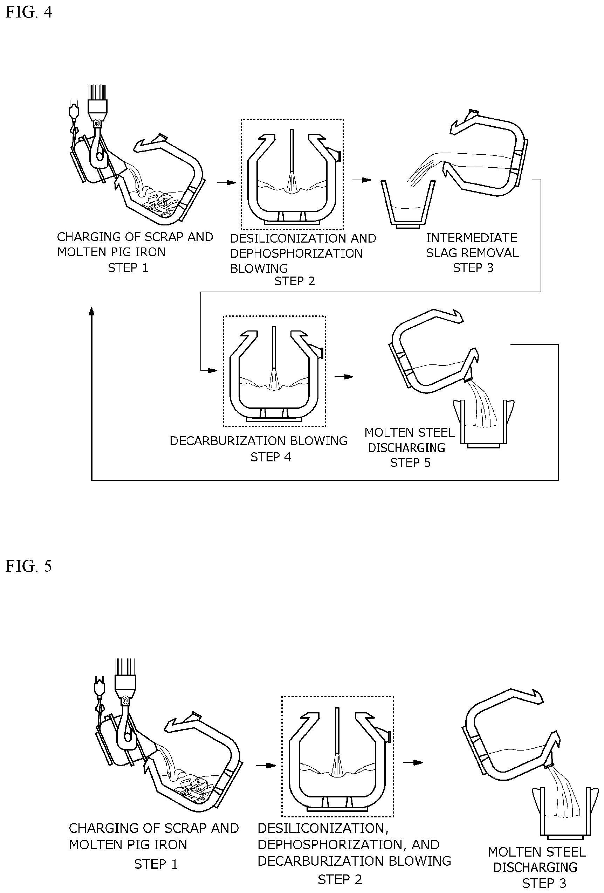

FIG. 4 is a schematic view for explaining each step in the second process of the molten steel manufacturing method according to the present invention. The second process of the molten steel manufacturing method according to the present invention will be explained with reference to FIG. 4. First, a raw material charging step (step 1) is performed by charging a cold iron source and molten pig iron to a converter-type vessel to form molten iron. A desiliconization and dephosphorization blowing step (step 2) is then performed in which a desiliconization and dephosphorization blowing is performed on the molten iron produced in the raw material charging step (step 1) by blowing oxidizing gas and a CaO-containing refining agent onto the molten iron from the blowing-purpose oxygen-blowing lance and also charging either a CaO-containing refining agent or recycled slag from the furnace top, and then an intermediate slag removal step (step 3) is performed by removing slag formed in the desiliconization and dephosphorization blowing step (step 2). Subsequently, a decarburization blowing step (step 4) in which a decarburization blowing is performed by blowing oxidizing gas onto the molten iron from the blowing-purpose oxygen-blowing lance and also charging either a CaO-containing refining agent or recycled slag from the furnace top to produce molten steel. Lastly, a molten steel discharging step (step 5) is performed by discharging the molten steel.

The second process of the molten steel manufacturing method described above involves performing the above-mentioned molten iron refining method in at least one step selected from the desiliconization and dephosphorization blowing step (step 2) and the decarburization blowing step (step 4). That can achieve heat transfer to the molten iron or to the molten steel without inhibiting stability of the blowing processes, which has hitherto been a problem, thus producing a thermal margin for dissolving the carbon steel (SC) serving as the cold iron source.

### <The third process of the molten steel manufacturing method>

FIG. 5 is a schematic view for explaining steps in the third process of the molten steel manufacturing method according to the present invention. The third process of the molten steel manufacturing method according to the present invention will be explained with reference to FIG. 5. First, a raw material charging step (step 1) is performed by charging a cold iron source and molten pig iron to a converter-type vessel to form molten iron. Subsequently, a blowing step (step 2) is performed in which a desiliconization, dephosphorization, and decarburization blowing is performed on the molten iron formed in the raw material charging step (step 1) by blowing oxidizing gas and a CaO-containing refining agent onto the molten iron from the blowing-purpose oxygen-blowing lance and also charging either a CaO-containing refining agent or recycled slag from the furnace top to produce molten steel. Lastly, a molten steel discharging step (step 3) is performed by discharging the molten steel.

The third process of the molten steel manufacturing method described above involves performing the abovementioned molten iron refining method in the blowing step (step 3). That can achieve heat transfer to the molten iron or the molten steel without inhibiting the stability of the blowing processes, which has hitherto been a problem, producing a thermal margin for dissolving the carbon steel (SC) serving as the cold iron source.

### Examples

Molten steel was manufactured by using the first to the third processes of the molten steel manufacturing method described above, with the same operation patterns (an oxygen blowing rate, a bottom blowing rate, and the like) under the conditions of the same ingredients, a pre-treatment temperature, treatment time, and the like. Further, a Hot Metal Ratio (HMR) was measured in each example to compare.

As shown in Table 1, for the first process, molten steel was manufactured with respect to the following: Treatment Nos. 1 and 2 without using a burner lance; Treatment Nos. 3 to 5 using a burner lance integrated with a blowing-purpose oxygen-blowing lance (the distance between the tip end and the molten iron surface: 2.5 m); and Treatment Nos. 6 to 8 using a burner lance capable of ascending and descending independently of a blowing-purpose oxygen-blowing lance (the distance between the tip end of the blowing-purpose oxygen-blowing lance and the molten iron surface: 2.5 m; the distance between the tip end of the burner lance and the molten iron surface: 3.5 m), and a hot metal ratio (HMR) reduction percentages as compared to a base condition (Treatment No. 1) were calculated.

Treatment No. 1 without using a burner lance serves as the base condition of the first process. Treatment No. 2 had the same ingredients and pre-treatment temperature as Treatment No. 1 but had increased [Si] in the molten iron due to the charging of FeSi as a heating material, and had a longer treatment time than Treatment No. 1 by 0.35 minutes. Treatment No. 3 had the same ingredients, pre-treatment temperature, and treatment time as Treatment No. 1. Treatment No. 4 had the same ingredients and pre-treatment temperature as Treatment No. 1, but had a significantly prolonged treatment time because the dephosphorization treatment blowing period was temporarily suspended due to occurrence of slopping. Treatment No. 5 had the same ingredients, treatment temperature, and treatment time as Treatment No. 1. Treatment Nos. 6, 7, and 8 each had the same ingredients, treatment temperature, and treatment time as Treatment No. 1.

As shown in Table 2, for the second process, molten steel was manufactured with respect to the following: Treatment Nos. 9 and 10 without using a burner lance; Treatment Nos. 11 and 12 using a burner lance integrated with a blowing-purpose oxygen-blowing lance (the distance between the tip end and the molten iron surface: 2.5 m); and Treatment Nos. 13 and 14 using a burner lance capable of ascending and descending independently of a blowing-purpose oxygen-blowing lance (the distance between the tip end of the blowing-purpose oxygen-blowing lance and the molten iron surface: 2.5 m; the distance between the tip end of the burner lance and the molten iron surface: 3.5 m), and a hot metal ratio (HMR) reduction percentages as compared to a base condition (Treatment No. 9) were calculated.

Treatment No. 9 without using a burner lance serves as the base condition of the second process. Treatment No. 10 had the same ingredients and pre-treatment temperature as Treatment No. 9, but had increased [Si] in the molten iron due to the charging of FeSi as a heating material, and had a longer treatment time than Treatment No. 9 by 0.4 minutes. Treatment No. 11 had the same ingredients and pre-treatment temperature as Treatment No. 9, but had a prolonged treatment time than Treatment No. 9 by 1 minute because the oxygen blowing rate was decreased due to occurrence of slopping in the desiliconization and dephosphorization blowing process. Treatment No. 12 had the same ingredients, pre-treatment temperature, and treatment time as Treatment No. 9. Treatment Nos. 13 and 14 each had the same ingredients, pre-treatment temperature, and treatment time as Treatment No. 9.

As shown in Table 3, for the third process, molten steel was manufactured with respect to the following: Treatment Nos. 15 and 16 without using a burner lance; Treatment Nos. 17 using a burner lance integrated with a blowing-purpose oxygen-blowing lance (the distance between the tip end and the molten iron surface: 2.5 m); and Treatment No. 18 using a burner lance capable of ascending and descending independently of a blowing-purpose oxygen-blowing lance (the distance between the tip end of the blowing-purpose oxygen-blowing lance and the molten iron surface: 2.5 m; the distance between the tip end of the burner lance and the molten iron surface: 3.5 m), and a hot metal ratio (HMR) reduction percentages as compared to a base condition (Treatment No. 15) were calculated.

Treatment No. 15 without using a burner lance serves as the base condition of the third process. Treatment No. 16 had the same ingredients and pre-treatment temperature as Treatment No. 15, but had increased [Si] in the molten iron due to the charging of FeSi as a heating material, and had a prolonged treatment time than Treatment No. 15 by 0.4 minutes. Treatment No. 17 had the same ingredients and pre-treatment temperature as Treatment No. 15, but had a significantly prolonged treatment time because the blowing was temporarily suspended due to slopping that occurred when the degree of progress in the blowing was 20%. Treatment No. 18 had the same ingredients, pre-treatment temperature, and treatment time as Treatment No. 15.

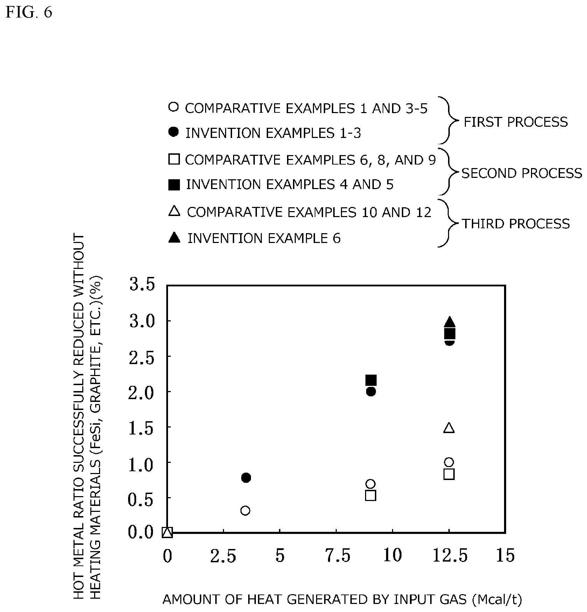

Tables 1 to 3 below show the results of the examples. FIG. 6 presents a relationship between amounts of heat generated by the charged gas (Mcal/t) and hot metal ratios (%) successfully reduced without using heating materials (FeSi, graphite, or the like) based on the results in Tables 1 to 3.

**[Table 1]**

| Treatment No. | Burner lance type | Amount of heat generated by supplied combustion gas | | | Hot metal ratio in process [%] | Amount of heat generated by charging heating material (FeSi) [Mcal/t] | Hot metal ratio reduction ratio as compared to treatment No. 1 [%] | Notes |
|---|---|---|---|---|---|---|---|---|
| | | Desiliconization blowing | Dephosphorization blowing | Decarburization blowing | | | | |
| 1 | Not used | 0 | 0 | 0 | 87.0 | 0 | 0 | Comparative Example |
| 2 | Not used | 0 | 0 | 0 | 86.0 | 5.48 | △1.0 | Comparative Example |
| 3 | Integrated type | 3.5 | 0 | 0 | 86.7 | 0 | △0.3 | Comparative Example |
| 4 | Integrated type | 3.5 | 5.5 | 0 | 86.3 | 1.38 | △0.7 | Comparative Example |
| 5 | Integrated type | 3.5 | 5.5 | 3.5 | 86.0 | 0 | △1.0 | Comparative Example |
| 6 | Independent type | 3.5 | 0 | 0 | 86.2 | 0 | △0.8 | Invention Example |
| 7 | Independent type | 3.5 | 5.5 | 0 | 85.0 | 0 | △2.0 | Invention Example |
| 8 | Independent type | 3.5 | 5.5 | 3.5 | 84.3 | 0 | △2.7 | Invention Example |

**[Table 2]**

| Treatment No. | Burner lance type | Amount of heat generated by supplied combustion gas [Mcal/t] | | Hot metal ratio in process [%] | Amount of heat generated by charging heating material (FeSi) [Mcal/t] | Hot metal ratio reduction ratio as compared to treatment No. 9 [%] | Notes |
|---|---|---|---|---|---|---|---|
| | | Desiliconization and dephosphorization blowing | Decarburization blowing | | | | |
| 9 | Not used | 0 | 0 | 85.0 | 0 | 0 | Comparative example |
| 10 | Not used | 0 | 0 | 83.0 | 6.03 | Δ1.8 | Comparative example |
| 11 | Integrated type | 9 | 0 | 84.5 | 0.55 | Δ0.5 | Comparative example |
| 12 | Integrated type | 9 | 3.5 | 84.1 | 0 | Δ0.9 | Comparative example |
| 13 | Independent type | 9 | 0 | 82.8 | 0 | Δ2.2 | Invention example |
| 14 | Independent type | 9 | 3.5 | 82.2 | 0 | Δ2.8 | Invention example |

**[Table 3]**

| Treatment No. | Burner lance and type | Amount of heat generated by supplied combustion gas [Mcal/t] | Hot metal ratio in process [%] | Amount of heat generated by charging heating material (FeSi) [Mcal/t] | Hot metal ratio reduction ratio as compared to treatment No. 15 [%] | Notes |
|---|---|---|---|---|---|---|
| | | Desiliconization, Dephosphorization, and Decarburization blowing | | | | |
| 15 | Not used | 0 | 83.0 | 0 | 0 | Comparison example |
| 16 | Not used | 0 | 81.3 | 5.5 | △1.7 | Comparison example |
| 17 | Integral type | 12.5 | 81.5 | 0 | △1.5 | Comparison example |
| 18 | Independent type | 12.5 | 80.0 | 0 | △3.0 | Invention example |

The results presented in Tables 1 to 3 and FIG. 6 show that all the invention examples using the burner lance capable of ascending and descending independently of the blowing-purpose oxygen-blowing lance can reduce the hot metal ratio by 2% to 3% as compared to the comparative examples using no burner lance. They also show that all the invention examples using the burner lance capable of ascending and descending independently of the blowing-purpose oxygen-blowing lance can reduce the hot metal ratio by 1% to 1.9% as compared to the comparative examples using the burner lance integrated with the blowing-purpose oxygen-blowing lance.

### Industrial Applicability

The molten iron refining method of the present invention can be used not only in any of the decarburization blowing, dephosphorization blowing, and desiliconization blowing processes as described above, but is also applicable to any refining process as long as a lance nozzle is employed, including a refining process in an electric furnace, for example, and therefore it is very useful.

### Reference Signs List

- 1:: converter-type vessel
- 2:: molten iron
- 3:: blowing-purpose oxygen-blowing lance
- 4:: burner lance
- 5:: flame
- 6:: powder particles

## Claims

1. A molten iron refining method for refining molten iron comprising adding an auxiliary raw material and supplying oxidizing gas to molten iron contained in a converter-type vessel,
**characterized in that**
the molten iron refining method comprises:
inserting, as far as to a position lower than an upper end inside the converter-type vessel, a blowing-purpose oxygen-blowing lance that supplies the oxidizing gas and that is capable of ascending and descending and at least one burner lance capable of ascending and descending independently of the blowing-purpose oxygen-blowing lance;
blowing, onto the molten iron, either oxidizing gas or oxidizing gas and CaO-containing refining agent from the blowing-purpose oxygen-blowing lance;
forming a flame by causing the burner lance to discharge fuel gas and combustion-supporting gas; and
causing powder particles discharged from the burner lance to pass through the flame and to be blown onto the molten iron in a heat-transferred state, to achieve thermal compensation of the molten iron.

2. A molten steel manufacturing method comprising:
a first raw material charging step of charging a cold iron source and molten pig iron to a first furnace of a converter-type vessel to form molten iron;
a desiliconization blowing step of performing a desiliconization blowing on the molten iron formed in the first raw material charging step by blowing oxidizing gas and a CaO-containing refining agent onto the molten iron from a blowing-purpose oxygen-blowing lance and also charging either a CaO-containing refining agent or recycled slag from a furnace top;
an intermediate slag removal step of removing slag formed in the desiliconization blowing step;
a dephosphorization blowing step of performing a dephosphorization blowing by blowing oxidizing gas from the blowing-purpose oxygen-blowing lance and also charging a CaO-containing refining agent or recycled slag from a furnace top;
a molten metal tapping step of tapping molten metal resulting from the dephosphorization blowing step;
a second raw material charging step of charging the molten metal tapped in the molten metal tapping step and a cold iron source to a second furnace of the converter-type vessel to produce molten iron;
a decarburization blowing step of performing a decarburization blowing process by blowing oxidizing gas onto the molten iron in the second furnace from the blowing-purpose oxygen-blowing lance and also charging either a CaO-containing refining agent or recycled slag from a furnace top to produce molten steel; and
a molten steel discharging step of discharging the molten steel,
**characterized in that**
the molten steel manufacturing method performs the molten iron refining method according to claim 1 in at least one step selected from among the desiliconization blowing step, the dephosphorization blowing step, and the decarburization blowing step.

3. A molten steel manufacturing method comprising:
a raw material charging step of charging a cold iron source and molten pig iron to a converter-type vessel to form molten iron;
a desiliconization and dephosphorization blowing step of performing a desiliconization and dephosphorization blowing on the molten iron formed in the raw material charging step by blowing oxidizing gas and a CaO-containing refining agent onto the molten iron from a blowing-purpose oxygen-blowing lance and also charging either a CaO-containing refining agent or recycled slag from a furnace top;
an intermediate slag removal step of removing slag formed in the desiliconization and dephosphorization blowing step;
a decarburization blowing step of performing a decarburization blowing by blowing oxidizing gas from the blowing-purpose oxygen-blowing lance and also charging either a CaO-containing refining agent or recycled slag from a furnace top to produce molten steel; and
a molten steel discharging step of discharging the molten steel,
**characterized in that**
the molten steel manufacturing method performs the molten iron refining method according to claim 1 in at least one step selected from the desiliconization and dephosphorization blowing step and the decarburization blowing step.

4. A molten steel manufacturing method comprising:
a raw material charging step of charging a cold iron source and molten pig iron to a converter-type vessel to form molten iron;
a blowing step of performing a desiliconization, dephosphorization, and decarburization blowing on the molten iron formed in the raw material charging step by blowing oxidizing gas and a CaO-containing refining agent onto the molten iron from a blowing-purpose oxygen-blowing lance and also charging either a CaO-containing refining agent or recycled slag from a furnace top to produce molten steel; and
a molten steel discharging step of discharging the molten steel,
**characterized in that**
the molten steel manufacturing method performs the molten iron refining method according to claim 1 in the blowing step.
